# EUROPÄISCHE PATENTSCHRIFT

(11) **EP 3 198 676 B1**
(45) Veröffentlichungstag und Bekanntmachung des Hinweises auf die Patenterteilung: **03.07.2019**
(21) Anmeldenummer: 15770839.7
(22) Anmeldetag: 22.09.2015
(51) Int. Cl.: H01M 10/625, H01M 10/6556, H01M 10/652, H01M 10/6567, H01M 10/613

(54) **WÄRMETAUSCHER FÜR EINE BATTERIE**
HEAT EXCHANGER FOR A BATTERY
ÉCHANGEUR DE CHALEUR POUR BATTERIE

(30) Priorität: 26.09.2014 DE 102014114024
(43) Veröffentlichungstag der Anmeldung: 02.08.2017
(73) Patentinhaber: Obrist Technologies GmbH, 6890 Lustenau (AT)
(72) Erfinder: OBRIST, Frank, A-6900 Bregenz (AT); GRAZ, Martin, A-6890 Lustenau (AT); ROTH, Joachim Georg, 89584 Ehingen (DE); GIESE, Peter, 91074 Herzogenaurach (DE)
(74) Vertreter: Kilchert, Jochen
(86) Internationale Anmeldenummer: PCT/EP2015/071633
(87) Internationale Veröffentlichungsnummer: WO 2016/046148

(56) Entgegenhaltungen:
- EP-A1- 0 516 280
- EP-A1- 2 744 034
- WO-A1-2013/037742
- WO-A1-2013/057952
- DE-U1-212012 000 223
- JP-A- 2012 199 148

## Beschreibung

Die Erfindung betrifft einen Wärmetauscher für eine Batterie gemäß dem Oberbegriff des Patentanspruchs 1. Ferner betrifft die Erfindung eine Batterie mit einem derartigen Wärmetauscher, ein Fahrzeug mit einer solchen Batterie sowie ein Herstellungsverfahren für den Wärmetauscher. Ein Wärmetauscher der eingangs genannten Art ist beispielsweise aus EP 2 744 034 A1 bekannt, die auf die Anmelderin zurückgeht.

Der aus der EP 2 744 034 A1 bekannte Wärmetauscher ist als Wärmeaustauschtasche ausgebildet, die zwei flexible Folienwände umfasst. Die flexiblen Folienwände überdecken beidseitig einen Rahmen, in dem Strömungsleitelemente angeordnet sind. Der Wärmetauscher ist mit einem Wärmetauschermedium durchströmbar, wofür Anschlüsse für die Zufuhr und Abfuhr des Wärmetauschermediums vorgesehen sind. Der bekannte Wärmetauscher wird zur Kühlung einer Batterie eingesetzt, wobei sich gezeigt hat, dass eine erhöhte Kühlleistung wünschenswert wäre.

DE 21 2012 000 223 U1 offenbart einen Batteriewärmetauscher mit einem mäanderförmig gewundenen Strömungskanal.

WO 2013/057952 A1 beschreibt einen Wärmetauscher zur Kühlung von Batteriezellen, der zwischen zwei Metallplatten ausgebildete Strömungskanäle aufweist. Die Strömungskanäle haben eine einheitliche Höhe und unterschiedliche Breite.

Der Erfindung liegt daher die Aufgabe zugrunde, den bekannten Wärmetauscher dahingehend weiterzuentwickeln, dass die Kühlleistung erhöht wird. Ferner ist es Aufgabe der vorliegenden Erfindung eine Batterie mit einem solchen Wärmetauscher, ein Fahrzeug mit einer solchen Batterie sowie ein Verfahren zum Herstellen des Wärmetauschers anzugeben.

Erfindungsgemäß wird diese Aufgabe im Hinblick auf den Wärmetauscher durch den Gegenstand des Patentanspruchs 1, im Hinblick auf die Batterie durch den Gegenstand des Patentanspruchs 7, im Hinblick auf das Fahrzeug durch den Gegenstand des Patentanspruchs 9 und im Hinblick auf das Herstellungsverfahren durch den Gegenstand des Patentanspruchs 10 gelöst.

Die Erfindung beruht auf dem Gedanken, einen Wärmetauscher für eine Batterie, insbesondere für einen Hybridantrieb, mit Anschlüssen für die Zu- und Abfuhr eines Wärmetauschermediums und mit einem Rahmen anzugeben, wobei der Rahmen beidseitig mit flexiblen Folienwänden zur Bildung einer durchströmbaren Tasche verbunden ist. Der Rahmen weist Strömungsleitelemente auf. Erfindungsgemäß weist der Rahmen ferner eine Trennplatte mit zwei parallelen Seitenflächen auf, wobei die Trennplatte die Tasche in eine erste Kammer und eine zweite Kammer teilt, die von den Seitenflächen und den jeweiligen Folienwänden fluiddicht begrenzt sind. In den Seitenflächen ist jeweils ein Kanalfeld aus parallelen Strömungskanälen ausgebildet, dessen Zuflussseite über einen Verteilerkanal und dessen Abflussseite über einen Sammelkanal mit den jeweiligen Anschlüssen fluidverbunden sind.

Durch die Trennplatte im Rahmen des Wärmetauschers und die somit in der Tasche ausgebildeten Kammern wird die Fluidströmung eines Wärmetauschermediums in der durchströmbaren Tasche optimiert, wodurch sich eine verbesserte Wärmeaufnahme ergibt. Der Wärmetauscher eignet sich daher insbesondere zum Kühlen von umliegenden Bauteilen und kann insofern ein Kühlelement bilden.

Das Wärmetauschermedium gelangt über einen Anschluss für die Zufuhr des Wärmetauschermediums in den Verteilerkanal und wird von diesem an die parallelen Strömungskanäle gleichmäßig verteilt. Das Wärmetauschermedium durchströmt die parallelen Strömungskanäle und gelangt in den Sammelkanal, der die Ströme der einzelnen Strömungskanäle bündelt und gemeinsam an einen Anschluss für die Abfuhr des Wärmetauschermediums übergibt. Der strukturelle Aufbau des Wärmetauschers ermöglicht so eine konstante und gleichmäßige Durchströmung der durchströmbaren Tasche, sodass ein effizienter Wärmeaustausch ermöglicht ist.

Zudem bietet der Aufbau des Wärmetauschers mit zwei Kammern die Möglichkeit, eine der Kammern zu deaktivieren, indem beispielsweise ein Abdichtmittel bzw. Füllmittel in eine der beiden Kammern eingebracht wird. So kann in der Serienfertigung ein einheitlicher Wärmetauscher hergestellt werden, der je nach Einsatzort angepasst werden kann. Soll der Wärmetauscher beispielsweise zwischen zwei Zellblöcken einer Batterie angeordnet werden, ist es wünschenswert, beide Kammern mit einem Wärmetauschermedium zu durchströmen, um eine Kühlung beider angrenzenden Zellblöcke zu erreichen. Wird der Wärmetauscher hingegen zwischen einem Zellblock und einer nicht zu kühlenden Struktur, beispielsweise einer Gehäusewand einer Batterie, angeordnet, so kann die Kammer, die dem Zellblock abgewandt ist, deaktiviert werden. Dies trägt ebenfalls zur Effizienz des Wärmetauschers bzw. des Kühlsystems bei, in welches der Wärmetauscher integriert ist.

In einer bevorzugten Ausführungsform des erfindungsgemäßen Wärmetauschers sind die Strömungskanäle quer zur Längsachse der Tasche orientiert. Eine solche Ausführungsform ist nicht nur aus Gründen der verbesserten Durchströmung der Tasche vorteilhaft, sondern bietet auch strukturelle Vorteile hinsichtlich des Einsatzzweckes des Wärmetauschers. So kann der Wärmetauscher ebenfalls zur Abstützung von Zellblöcken dienen. Der Rahmen ist dazu vorzugsweise derart stabil ausgebildet, dass sich Batteriezellen, insbesondere deren Pole, auf dem Rahmen, beispielsweise den Strömungsleitelementen, abstützen können. Der Rahmen kann insofern einen Abstandshalter zwischen den Zellblöcken bilden.

In diesem Zusammenhang wird darauf hingewiesen, dass Zellblöcke einer Batterie üblicherweise aus mehreren Batteriezellen gebildet sind, wobei die Batteriezellen im vorliegenden Fall vorzugsweise als Rundzellen ausgebildet sind. Die Rundzellen können stehend in Reihen nebeneinander angeordnet sein, sodass die Batteriezellen mit deren Zylindermantelflächen aneinander anliegen. Die Batteriezellen können über Kontaktplatten bzw. Kontaktbleche in Parallelschaltung und Reihenschaltung miteinander verbunden sein.

Zur einfacheren Integration des Wärmetauschers in eine Batterie und zur weiteren Optimierung der Wärmeaustauschkapazität des Wärmetauschers sind gemäß der Erfindung die Anschlüsse an einer Schmalseite der Tasche vorgesehen. Dabei nimmt die Länge der Strömungskanäle mit zunehmendem Abstand von den Anschlüssen zu. Insgesamt ist vorgesehen, dass die Strömungskanäle des Kanalfelds unterschiedliche Längen aufweisen. Es ergibt sich eine besonders gute Durchströmung der Tasche, wenn die Länge der Strömungskanäle zunimmt je weiter der jeweilige Strömungskanal von den Anschlüssen entfernt angeordnet ist.

Die maximale Länge der Strömungskanäle kann der Breite der Tasche entsprechen. Insbesondere kann vorgesehen sein, dass ein Strömungskanal, der am weitesten von den Anschlüssen entfernt angeordnet ist, eine Länge aufweist, die der Breite der Tasche entspricht. Ein derartiger Strömungskanal weist vorzugsweise an seinen Längsenden jeweils eine seitliche Öffnung auf, die unmittelbar in den Verteilerkanal bzw. den Sammelkanal übergeht. Insbesondere geht eine solche seitliche Öffnung in ein Längsende des Verteilerkanals bzw. des Sammelkanals über.

Hinsichtlich einer gleichmäßigen Strömungsverteilung innerhalb der Tasche hat es sich ferner als vorteilhaft erwiesen, wenn das Kanalfeld einen ersten Bereich mit derselben Kanallänge, einen zweiten Bereich mit konstant zunehmender Kanallänge, einen Übergangsbereich mit größerer Zunahme der Kanallänge als im zweiten Bereich und einen dritten Bereich mit konstant zunehmender Kanallänge aufweist. Die zuvor genannten Bereiche können entlang der Längsachse der Tasche hintereinander angeordnet sein, wobei der erste Bereich den Anschlüssen am nächsten angeordnet ist und der dritte Bereich den größten Abstand zu den Anschlüssen aufweist. Die Dimensionen der einzelnen Bereiche ergeben sich vorzugsweise aus Strömungsberechnungen. Als besonders vorteilhaft hat sich herausgestellt, wenn sich in allen Strömungskanälen eine einheitliche Strömungsgeschwindigkeit einstellt. Um dies zu erreichen, variiert die Länge der einzelnen Strömungskanäle vorzugsweise derart, dass längere Strömungskanäle weiter beabstandet von den Anschlüssen angeordnet sind. Insgesamt ergibt sich somit über die gesamte wärmeaufnehmende Oberfläche des Wärmetauschers eine gleichmäßige Temperaturverteilung bzw. ein gleichmäßiges Wärmeaufnahmevermögen.

Für die Serienproduktion und für die gleichmäßige Durchströmung der Tasche vorteilhaft ist es, dass die Strömungskanäle bei der Erfindung eine einheitliche Breite aufweisen. Dabei erhöht sich die Höhe der Strömungskanäle von einem anschlussseitigen Ende zu einem den Anschlüssen gegenüberliegenden Ende des Wärmetauschers. Um eine gleichmäßige Strömungsgeschwindigkeit über alle Strömungskanäle einzustellen, ist es zweckmäßig, den Strömungsquerschnitt der einzelnen Strömungskanäle in Abhängigkeit vom Abstand der Strömungskanäle zu den Anschlüssen anzupassen. Als vorteilhaft hat es sich herausgestellt, wenn die Höhe der Strömungskanäle mit zunehmendem Abstand von den Anschlüssen ebenfalls erhöht wird. So kann die Breite der Strömungskanäle konstant bleiben, was für einen gleichmäßigen Wärmeaustausch und eine Stabilisierungsfunktion, die der Rahmen für Batteriezellen zusätzlich bereitstellen kann, vorteilhaft ist.

Da der vorliegende Wärmetauscher eine Trennplatte aufweist, die die Tasche in eine erste Kammer und eine zweite Kammer trennt, sollte gewährleistet sein, dass zwischen den beiden Kammern ein ausreichender und gleichmäßiger Austausch des Wärmetauschermediums erfolgt. Dazu ist in bevorzugten Ausführungsformen vorgesehen, dass die Trennplatte zwei Durchbrechungen aufweist, die jeweils von den Anschlüssen ausgehen. Dem Zufuhranschluss und dem Abfuhranschluss kann jeweils eine Durchbrechung zugeordnet sein, die sich vorzugsweise von dem jeweiligen Anschluss ausgehend entlang der Längsachse der Tasche erstreckt. Konkret ist vorgesehen, dass die Durchbrechungen sich jeweils parallel zur Längsachse der Tasche entlang des Kanalfelds, insbesondere entlang des ersten Bereichs und zumindest abschnittsweise entlang des zweiten Bereichs, erstrecken.

Die Durchbrechungen können vor dem Übergangsbereich enden. Dabei kann sich die Breite der Durchbrechungen in Längsrichtung der Tasche ausgehend von dem jeweiligen Anschluss jeweils verjüngen. Diese Konstruktion hat sich als vorteilhaft herausgestellt, da so eine gleichmäßige Verteilung des über den Zufuhranschluss einströmenden Wärmetauschermediums auf die erste Kammer und die zweite Kammer erreicht wird. Analog hierzu ermöglicht die Durchbrechung, die dem Abfuhranschluss zugeordnet ist, eine gleichmäßige Sammlung des Wärmetauschermediums aus der ersten Kammer und der zweiten Kammer, um diese über den Abfuhranschluss aus der Tasche zu entnehmen. Die Durchbrechungen können jeweils im Verteilerkanal und im Sammelkanal angeordnet sein. Außerdem kann vorgesehen sein, dass die Durchbrechungen mit ihren Konturen der Form des jeweiligen Verteilerkanals bzw. Sammelkanals folgen.

Hinsichtlich des Verteilerkanals kann in bevorzugten Ausführungsformen vorgesehen sein, dass dessen Querschnittsfläche sich von einem anschlussseitigen Ende des Wärmetauschers zu einem den Anschlüssen gegenüberliegenden Ende des Wärmetauschers reduziert. Mit anderen Worten verjüngt sich der Verteilerkanal ausgehend von dem Anschluss in Richtung des gegenüberliegenden Endes des Wärmetauschers. Dies dient ebenfalls dazu, die Strömungsgeschwindigkeiten in den Strömungskanälen anzugleichen. Da mit zunehmender Entfernung von dem Zufuhranschluss an jedem Strömungskanal jeweils ein Teil des zugeführten Wärmetauschermediums und dem Strom im Verteilerkanal abgezweigt wird, ist eine Anpassung des Strömungsquerschnitts notwendig, um eine konstante Strömungsgeschwindigkeit aufrecht zu erhalten. Dies wird bei der Erfindung durch die Verjüngung des Verteilerkanals erreicht. Umgekehrt kann der Sammelkanal sich zum Abfuhranschluss hin hinsichtlich seiner Querschnittsfläche erweitern. Damit ist gewährleistet, dass trotz des zum Abfuhranschluss hin ansteigenden Fluidvolumens, welches von den Strömungskanälen sukzessive in den Sammelkanal gelangt, eine einheitliche Strömungsgeschwindigkeit in dem Sammelkanal aufrechterhalten wird. In bevorzugter Weise ist dazu vorgesehen, dass sich die Strömungsgeschwindigkeiten im Verteilerkanal und im Sammelkanal gleichen, sodass eine kontinuierliche, insbesondere druckneutrale, Fluidströmung innerhalb der Tasche gewährleistet ist.

Gemäß einem nebengeordneten Aspekt der Erfindung wird in der vorliegenden Anmeldung eine Batterie beansprucht, die wenigstens einen zuvor beschriebenen Wärmetauscher aufweist. Die Batterie kann zudem wenigstens zwei Zellblöcke aus zu temperierenden Rundzellen aufweisen, wobei der Wärmetauscher zwischen den Zellblöcken angeordnet ist. Im Betrieb kann die erste Kammer des Wärmetauschers den einen der beiden Zellblöcke und die zweite Kammer des Wärmetauschers den anderen der beiden Zellblöcke temperieren. Der Betriebszustand umfasst in diesem Zusammenhang sowohl den separaten bzw. alleinigen Betrieb eines Wärmetauscherkreislaufs, als auch den kombinierten Betrieb eines Wärmetauscherkreislaufs mit einem Energiekreislauf. Mit anderen Worten ist im Betrieb wenigstens ein Wärmetauscherkreislauf aktiv, sodass das Wärmetauschermedium durch den Wärmetauscher zirkuliert. Zusätzlich können auch die Zellblöcke im Betriebszustand sein, wobei dies sowohl für die Zufuhr von elektrischer Energie an die Zellblöcke (Laden) als auch für die Entnahme von Energie aus den Zellblöcken (Entladen) gilt.

In einer bevorzugten Ausführungsform der erfindungsgemäßen Batterie ist vorgesehen, dass zur Temperierung eines endseitigen Zellblockes die vom Zellblock abgewandte Kammer des Wärmetauschers mit einem Füllmittel gefüllt ist, das die Strömungskanäle blockiert. Dies erhöht die Energieeffizienz des Systems, da nur diejenige Kammer kontinuierlich mit einem Wärmetauschermedium durchströmt werden muss, die mit dem zu temperierenden Zellblock in Kontakt steht. Die weitere Kammern, die keinen Kontakt zu einem Zellblock aufweist, ist deaktiviert. Dies hat auch für die Serienproduktion Vorteile, da ein standardisierter Wärmetauscher sowohl zur Anordnung zwischen zwei Zellblöcken, als auch zur Anordnung an einem endseitigen Zellblock, beispielsweise zwischen einer Gehäusewand und dem endseitigen Zellblock, eingesetzt werden kann. Zur Erhöhung der Energieeffizienz sind einige der standardisierten Wärmetauscher für den Einsatz an endseitigen Zellblöcken anzupassen, indem eine der Kammern des entsprechenden Wärmetauschers blockiert wird, beispielsweise mit dem Füllmittel. Dies kann im Rahmen der Herstellung dadurch erfolgen, dass vor dem Auflegen einer der beiden Folienwände des Wärmetauschers auf den Rahmen das Füllmittel, beispielsweise in Form einer Dichtmittelraupe, auf eine Seitenfläche des Rahmens aufgebracht wird. Anschließend wird die Folienwand aufgelegt und gegen den Rahmen angepresst. Dadurch verläuft das Füllmittel und fließt in die Strömungskanäle, die es damit blockiert. Die Folienwand kann dann mit dem Rahmen verschweißt werden.

Insofern ist es gemäß einem nebengeordneten Aspekt der Erfindung bevorzugt, wenn zur Herstellung des Wärmetauschers ein Verfahren zum Einsatz kommt, bei dem der Rahmen und die Folienwände mit einem Laser verschweißt werden.

Das Verschweißen der Ränder der Folienwände kann durch ein Scanner-Laserschweißverfahren erfolgen. Dabei kann auch vorgesehen sein, die Folienwände mit zwei Schweißnähten zu verbinden, wobei die Schweißnähte in einem konstanten Abstand zueinander verlaufen. Dies bildet einen zusätzlichen Schutz vor Leckage. Insbesondere wird dadurch eine Redundanz erzeugt, so dass eine Dichtigkeit des Wärmetauschers auch sichergestellt ist, wenn eine der Schweißnähte lückenhaft ist.

Im Rahmen der vorliegenden Anmeldung wird außerdem ein Fahrzeug, insbesondere ein Hybridfahrzeug, offenbart und beansprucht, welches eine zuvor beschriebene Batterie aufweist. Die Batterie umfasst den hier erläuterten Wärmetauscher.

Die Erfindung wird im Folgenden anhand eines Ausführungsbeispiels unter Bezugnahme auf die beigefügten, schematischen Zeichnungen näher erläutert. Darin zeigen:
- Fig. 1: eine perspektivisch Ansicht eines Rahmens für einen erfindungsgemäßen Wärmetauscher;
- Fig. 2: eine Teilquerschnittsansicht mit dem Rahmen gemäß Fig. 1 in einem ersten Bereich des Kanalfelds, welcher nahe an den Anschlüssen des Wärmetauschers angeordnet ist;
- Fig. 3: eine Teilschnittansicht durch den Wärmetauscher gemäß Fig. 2 in einem dritten Bereich des Kanalfelds, welcher weiter entfernt von den Anschlüssen angeordnet ist;
- Fig. 4: eine unterbrochene Längsschnittansicht durch den Wärmetauscher gemäß Fig. 2, wobei der erste Bereich und der dritte Bereich des Kanalfelds dargestellt sind; und
- Fig. 5: eine perspektivische Ansicht eines Zellblocks mit dem Wärmetauscher gemäß Fig. 2.

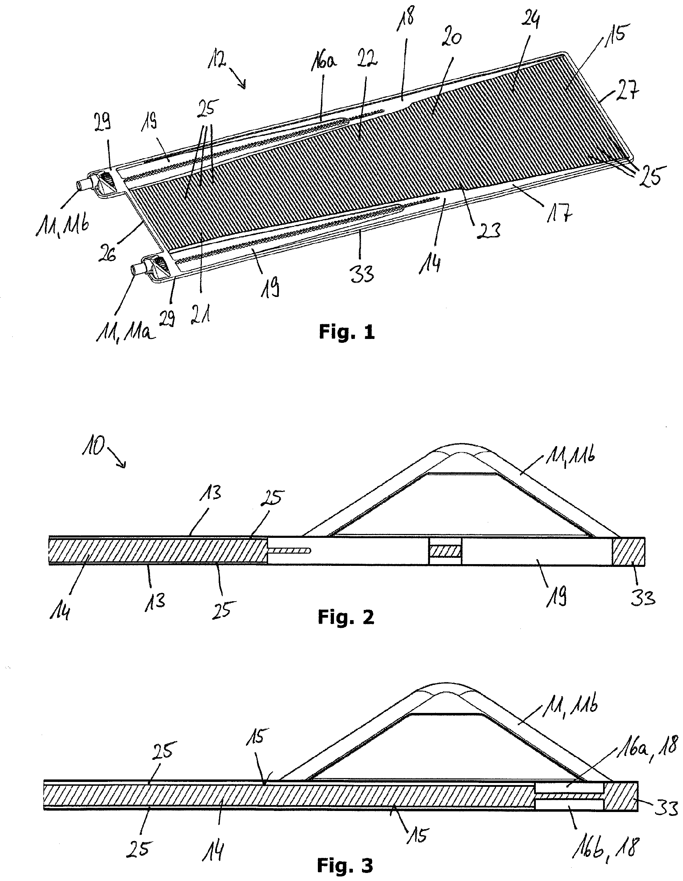

In Fig. 1 ist ein Rahmen 12 eines Wärmetauschers gezeigt, wobei der Rahmen 12 gemeinsam mit flexiblen Folienwänden 13 eine Tasche 10 des Wärmetauschers bilden kann. Der Aufbau der Tasche 10 ist detailliert in den Figuren 2 bis 4 dargestellt.

Der Rahmen 12 ist vorzugsweise aus einem Kunststoff, insbesondere Polypropylen gebildet und umfasst einstückig mit dem Rahmen 12 ausgeformte Anschlüsse 11. Insbesondere sind ein Zufuhranschluss 11a und ein Abfuhranschluss 11b vorgesehen. Die Anschlüsse 11 sind identisch, sodass ihre Funktion austauschbar ist. Mit anderen Worten können beide Anschlüsse 11 sowohl für die Zufuhranschluss eines Wärmetauschermediums, als auch für die Abfuhr eines Wärmetauschermediums genutzt werden, je nach dem wie der Wärmetauscher in einen Kühlkreislauf für eine Batterie eingebunden wird.

Wie in Fig. 1 gut erkennbar ist, weist der Rahmen 12 ein Kanalfeld 20 auf, das aus mehreren parallel zueinander und quer zur Längsachse der Tasche 10 laufenden Strömungskanälen 25 gebildet ist. Die Strömungskanäle 25 stehen dabei in Fluidverbindung mit einem Verteilerkanal 17, der den Zufuhranschluss 11a zugeordnet ist sowie mit einem Sammelkanal 18, der dem Abfuhranschluss 11b zugeordnet ist. Analog zu den Anschlüssen 11 ist auch eine Funktionsumkehr beim Verteilerkanal 17 und Sammelkanal 18 möglich, je nach dem wie der Wärmetauscher in einen Kühlkreislauf eingebunden ist. Die Bezeichnung des Verteilerkanals 17 und des Sammelkanals 18 ist also von der Strömungsrichtung des Wärmetauschermediums abhängig.

Der Rahmen 12 umfasst bzw. bildet eine Trennplatte 14. An einer Schmalseite des Rahmens 12 bzw. der Trennplatte 14 sind zwei Vorsprünge 29 ausgebildet, die die Anschlüsse 11 tragen. Der Rahmen 12 ist aus einem einheitlichen Material in einstückiger Weise gebildet. Insbesondere kann der Rahmen 12 als Spritzgussteil ausgebildet sein.

In der Trennplatte 14 sind Durchbrechungen 19 angeordnet, wobei jeweils eine Durchbrechung 19 einem Anschluss 11 zugeordnet ist. Insbesondere erstreckt sich die Durchbrechung 19 von dem Anschluss 11 ausgehend parallel zur Längsachse der Tasche 10 bzw. des Rahmens 12. Die Durchbrechung 19 ermöglicht eine Fluidverbindung zwischen zwei Kammern 16a, 16b der Tasche 10, die durch die Trennplatte 14 voneinander getrennt sind. Die Durchbrechungen 19 erstrecken sich insbesondere entlang des Verteilerkanals 17 bzw. des Sammelkanals 18 und folgen den Dimensionen, insbesondere der Breite, des Verteilerkanals 17 bzw. Sammelkanals 18.

Das Kanalfeld 20, das aus mehreren Strömungskanälen 25 gebildet ist, ist ebenfalls einstückig mit dem Rahmen 12 bzw. der Trennplatte 14 ausgebildet. Insbesondere weist die Trennplatte 14 auf ihren beiden Seitenflächen 15 jeweils mehrere Stege 28 auf, die die einzelnen Strömungskanäle 25 voneinander trennen. Die Stege 28 sind vorzugsweise regelmäßig voneinander beabstandet, sodass alle Strömungskanäle 25 eine einheitliche Breite aufweisen. Die Länge der Stege 18 bzw. der Strömungskanäle 25 variiert jedoch entlang des Kanalfelds 20.

Insgesamt lässt sich das Kanalfeld 20 in mehrere Bereiche 21, 22, 23, 24 unterteilen. Konkret ist vorgesehen, dass am anschlussseitigen Ende 16 das Kanalfeld 20 einen ersten Bereich 21 aufweist. An einem ersten Bereich 21 schließt sich in Längsrichtung des Rahmens 12 ein zweiter Bereich 22 an. Darauf folgt ein Übergangsbereich 23. Das Kanalfeld 20 schließt an dem den Anschlüssen 11 gegenüberliegenden Ende 27 der Tasche 10 mit einem dritten Bereich 24 ab.

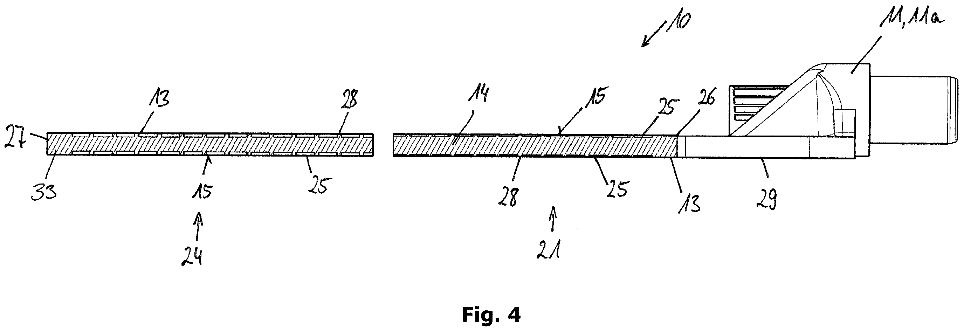

Die einzelnen Bereiche 21, 22, 23, 24 unterscheiden sich insbesondere durch die Länge der darin enthaltenen Strömungskanäle 25. Zudem variiert die Höhe der Strömungskanäle 25 worauf später im Zusammenhang mit Fig. 4 detailliert eingegangen wird.

Konkret ist vorgesehen, dass die Strömungskanäle 25 im ersten Bereich 21 eine im Wesentlichen einheitliche Länge aufweisen. Im zweiten Bereich 22, der sich an den ersten Bereich 21 anschließt, umfassen die Strömungskanäle 25 eine Länge bzw. Kanallänge, die mit zunehmendem Abstand zum anschlussseitigen Ende 26 kontinuierlich ansteigt. Der zweite Bereich 22 bildet insofern eine Trapezform, wobei die zueinander konvergierenden Seitenflächen des Trapezes durch die Einlässe und Auslässe der Strömungskanäle 25 definiert sind. Der Rahmen 12 weist, wie in Fig. 1 gut erkennbar ist, im Wesentlichen eine rechteckige Grundform auf. Folglich ist vorgesehen, dass der Verteilerkanal 17 und der Sammelkanal 18 auf Höhe des zweiten Bereichs 22 sich kontinuierlich verjüngen. Dasselbe gilt für die Durchbrechungen 19, die der Kontur des Verteilerkanals 17 bzw. des Sammelkanals 18 folgen.

Im Übergangsbereich 23, der zwischen dem zweiten Bereich 22 und dem dritten Bereich 24 angeordnet ist, erfolgt eine deutlich stärkere Zunahme der Kanallängen der Strömungskanäle 25 als im zweiten Bereich 22. Dies ist gut in Fig. 1 erkennbar. Mit anderen Worten verbreitert sich das Kanalfeld 20 im Übergangsbereich 23 stärker als im zweiten Bereich 22. Die Steigerung der Kanallängen im Übergangbereich 23 ist außerdem stärker als im dritten Bereich 24. Der dritte Bereich 24 schließt sich an den Übergangsbereich 23 an und weist ebenfalls eine kontinuierliche Erhöhung der Kanallängen der Strömungskanäle 25 auf. Dabei steigert sich die Kanallänge mit zunehmendem Abstand vom abschlussseitigen Ende 26 des Rahmens 12 bis zu einem Maximum. Am Maximum weist der Strömungskanal 25, insbesondere der vom anschlussseitigen Ende 26 am weitesten entfernte bzw. der dem gegenüberliegenden Ende 27 am nächsten angeordnete Strömungskanal 25, eine Kanallänge auf, die nahezu der Breite des Rahmens 12 bzw. der Tasche 10 entspricht. Der längste Strömungskanal 25 weist an seinen Längsenden seitlich schräge Öffnungen auf, die in Fluidverbindung mit dem Verteilerkanal 17 bzw. dem Sammelkanal 18 stehen.

Wie in Fig. 1 außerdem erkennbar ist, weisen die unterschiedlichen Bereiche 21, 22, 23, 24 in Längsrichtung des Rahmens 12 betrachtet unterschiedliche Längen auf. Mit anderen Worten variiert die Anzahl der Strömungskanäle 25 von Bereich zu Bereich. Dabei weist der Übergangsbereich 23 die geringste Anzahl an Strömungskanälen 25 auf. Die höchste Anzahl von Strömungskanälen 25 befindet sich im zweiten Bereich 22. Der dritte Bereich 24 weist eine Anzahl von Strömungskanälen 25 auf, die kleiner als im zweiten Bereich 22 und größer als im ersten Bereich 21 ist.

Die hier beschriebene Gestaltung des Kanalfelds 20 ermöglicht es, über alle Strömungskanäle 25 eine im Wesentlichen einheitliche Strömungsgeschwindigkeit für ein Wärmetauschermedium zu erreichen. Dies ist für einen effizienten Wärmeaustausch besonders vorteilhaft. Demzufolge ist auch vorgesehen, dass auf beiden Seiten der Trennplatte 14, also auf beiden Seitenflächen 15 der Trennplatte 14, identische Kanalfelder 20 angeordnet sind.

Die Tasche 10 des Wärmetauschers wird dadurch gebildet, dass auf beide Seitenflächen 15 des Rahmens 12 flexible Folienwände 13 aufgebracht sind, die mit dem Rahmen 12 fluiddicht und fest verbunden sind. Insbesondere können die Folienwände 13 mit dem Rahmen 12 verschweißt sein. Dies kann beispielsweise durch ein Laserschweißverfahren erfolgen. Dabei sind die Folienwände 13 insbesondere fest mit den Stegen 28 sowie einem Außenrand 33 des Rahmens verbunden. Der Außenrand 33 steht über beide Seitenflächen 15 der Trennplatte 14 über und weist eine einheitliche Dicke auf. Die Oberflächen des Außenrandes 33 definieren dabei jeweils eine gemeinsame Verbindungsebene, in welcher auch die Oberflächen der Stege 28 liegen. So ist ermöglicht, dass die Folienwände 13 flach auf dem Rahmen 12 angeordnet werden können und dicht auf den Außenflächen der Stege 28 und dem Außenrand 33 aufliegen.

In Fig. 2 ist der Querschnittsaufbau der Tasche 10 des Wärmetauschers gezeigt, wobei der Querschnitt am anschlussseitigen Ende 26 der Tasche 10 dargestellt ist. Fig. 2 zeigt dabei die Trennplatte 14, deren Kernbereich am anschlussseitigen Ende 26 des Rahmens 12 eine relativ große Wandstärke aufweist. Folglich umfasst der hier geschnittene Strömungskanal 25 eine relativ geringe Höhe. Durch die Einstellung der Höhe des Strömungskanals 25 kann die Strömungsgeschwindigkeit im Strömungskanal 25 eingestellt werden. Da mit zunehmendem Abstand zum anschlussseitigen Ende 26 der Tasche 10 das zur Zuführung in die einzelnen Strömungskanäle 25 verfügbare Fluidvolumen sinkt, ist vorgesehen, dass mit zunehmenden Abstand vom anschlussseitigen Ende 26 die Höhe der Strömungskanäle 25 ansteigt. Damit wird der Strömungsquerschnitt in den Strömungskanälen 25 sukzessive, insbesondere nicht zwingend linear, vom anschlussseitigen Ende 26 zum gegenüberliegenden Ende 27 hin erhöht, das bei der Fluiddurchströmung zu einer einheitlichen Strömungsgeschwindigkeit im Kanalfeld 20 führt.

Bei der Schnittdarstellung gemäß Fig. 2 ist außerdem die Durchbrechung 19 erkennbar, die eine erste Kammer 16a und eine zweite Kammer 16b der Tasche 10 miteinander verbindet. Die erste Kammer 16a und die zweite Kammer 16b sind durch die Trennplatte 14 voneinander getrennt. Die Durchbrechung 19 ist an einer Außenseite der Tasche 10 durch den Außenrand 33 des Rahmens 12 begrenzt. Außerdem ist in Fig. 2 eine Rückansicht des Fluidanschlusses 11 aufgezeigt. Es ist gut erkennbar, dass der Fluidanschluss 11 im Wesentlichen eine dachförmige Querschnittskontur aufweist. Diese Formgebung ist vorteilhaft, um die Fluidströmung des Wärmetauschermediums mit geringstmöglichem Druckabfall von einem runden Querschnitt am Anschluss 11 in den flachen Verteilerkanal 17 bzw. Sammelkanal 18 zu überführen.

Das Wärmetauschermedium gelangt über den runden Zufuhrabschluss 11a in den flachen Verteilerkanal 17, wobei durch die Durchbrechung 19 eine gleichmäßige Verteilung der Fluidströmung auf die erste Kammer 16a und die zweite Kammer 16b erreicht wird. Der Verteilerkanal 17 verteilt die Fluidströmung auf alle Strömungskanäle 25 des Kanalfelds 20. Demzufolge erstreckt sich der Verteilerkanal 17 über die gesamte Länge der Tasche 10 bzw. des Kanalfelds 20. Nach Durchströmen der einzelnen Strömungskanäle 25 gelangt das Wärmetauschermedium in den Sammelkanal 18, wobei die Fluidströme aus den Sammelkanälen 18 auf beiden Seiten der Trennplatte 14 durch die Durchbrechung 19 miteinander vereint werden. Es ist vorgesehen, dass sich beide Durchbrechungen 19 lediglich über einen Teil der Länge der Tasche 10 erstrecken, beispielsweise über etwa die halbe Länge der Tasche 10. Jedenfalls enden die Durchbrechungen 19 vor dem Übergangsbereich 23 des Kanalfelds 20. Das im Sammelkanal 18 geführte Wärmetauschermedium verlässt dann die Tasche 10 über den Abfuhranschluss 11b.

In Fig. 3 ist eine Teilquerschnittsansicht durch die Tasche 10 an dem den Anschlüssen 11 gegenüberliegenden Ende 27 der Tasche, d.h. auf Höhe des dritten Bereichs 24 des Kanalfelds 20, gezeigt. Es ist gut erkennbar, dass der Strömungskanal 25 eine größere Länge aufweist als der Strömungskanal 25 am anschlussseitigen Ende 26, welches in Fig. 2 dargestellt ist. Ebenfalls ist erkennbar, dass die Trennplatte 14 sich über die gesamte Breite der Tasche 10 erstreckt. Im hier gezeigten dritten Bereich 24 des Kanalfelds 20 ist keine Durchbrechung 19 angeordnet. Vielmehr sind die Kammern 16a, 16b klar voneinander getrennt, wobei jede der Kammern 16a, 16b jeweils einen Sammelkanal 18 aufweist. Ebenfalls erkennbar ist, dass die Höhe des Strömungskanals 25 an gegenüberliegenden Ende 27 größer als am anschlussseitigen Ende 26 (Fig. 2) ist.

Die unterschiedliche Höhe der Strömungskanäle 25 ist ferner in Fig. 4 dargestellt, die eine Querschnittsansicht durch die Tasche 10 zeigt. Aus Gründen der Übersichtlichkeit ist die Querschnittsansicht mittig unterbrochen, sodass in der linken Zeichnungshälfte ein den Anschlüssen 11 gegenüberliegendes Ende 27 der Tasche 10, insbesondere der dritte Bereich 24 des Kanalfelds 20, dargestellt ist. In der rechten Zeichnungshälfte ist das anschlussseitige Ende 26 der Tasche 10, insbesondere der erste Bereich 21 des Kanalfelds 20, gezeigt. Es ist erkennbar, dass die Strömungskanäle 25 im ersten Bereich 21 eine deutlich geringere Höhe als die Strömungskanäle 25 im dritten Bereich 24 aufweisen. Dabei erfolgt die Variation der Höhe durch Verringerung der Wandstärke des Kernbereichs der Trennplatte 14, sodass die Oberflächen der Stege 28 in einer gemeinsamen Ebene angeordnet bzw. zueinander flächenbündig ausgerichtet sind. In diesem Zusammenhang wird darauf hingewiesen, dass sich die Höhe der Strömungskanäle 25 vom anschlussseitigen Ende 26 zum gegenüberliegenden Ende 27 der Tasche kontinuierlich steigern kann. Bevorzugt ist es jedoch, wenn sich die Höhe der Strömungskanäle 25 vom anschlussseitigen Ende 26 zum gegenüberliegenden Ende 27 der Tasche 10 bzw. des Rahmens 12 bereichsweise ändert. Insbesondere können die Strömungskanäle 25 jeweils innerhalb des ersten Bereichs 21, des zweiten Bereichs 22, des Übergangsbereichs 23 und des dritten Bereichs 24 eine einheitliche Höhe aufweisen.

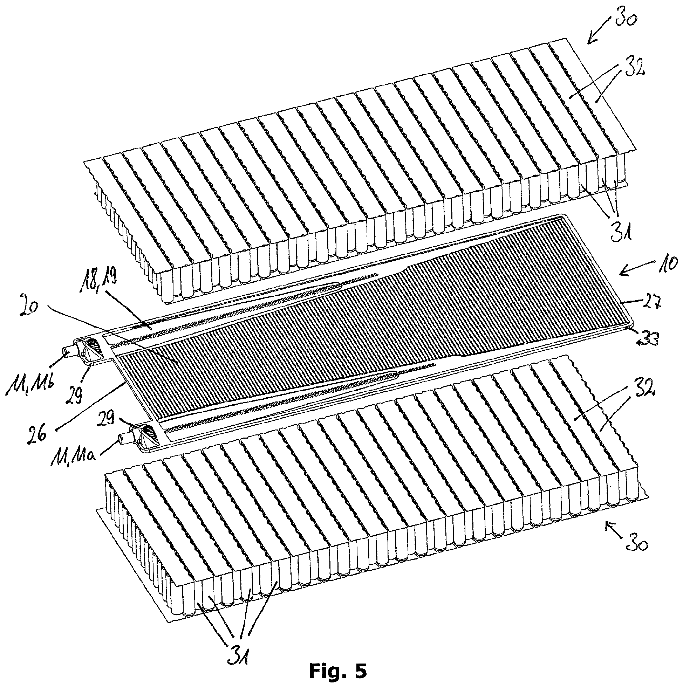

Der hier beschriebene Wärmetauscher wird vorzugsweise zur Kühlung einer Batterie eingesetzt. Der innere Aufbau einer solchen Batterie ist beispielhaft anhand der Explosionsdarstellung gemäß Fig. 5 gezeigt. Eine Batterie, die vorzugsweise für einen Hybridantrieb bzw. als Energiespeicher für ein Hybridfahrzeug genutzt wird, umfasst wenigstens zwei Zellblöcke 30, die jeweils aus einzelnen elektrisch und mechanisch miteinander verbunden Batteriezellen 31 aufgebaut sind. Die Batteriezellen 31 sind vorzugsweise als Rundzellen ausgebildet, die in Reihe stehend angeordnet sind. Die Batteriezellen 31 sind durch Kontaktplatten 32 elektrisch und mechanisch gekoppelt, wobei die Kontaktplatten 32 jeweils die stirnseitigen Pole benachbarter Batteriezellen 31 miteinander verbinden. Zwischen den Zellblöcken ist die Tasche 10 angeordnet, sodass über die Kontaktplatten 32 ein Wärmeübergang von den Zellblöcken 30 an die Tasche 10 ermöglicht ist. Der in Fig. 5 innere Aufbau der Batterie ist vorzugsweise ein Gehäuse integriert, wobei das Gehäuse Mittel aufweist, die die Zellblöcke 30 und die Tasche 10 miteinander verspannen, um einen kontinuierlichen und guten wärmeleitenden Kontakt aufrecht zu erhalten.

Für eine derartige Batterie ist es außerdem bevorzugt vorgesehen, dass jeder Zellblock 30 jeweils zwischen zwei Wärmetauschern bzw. Taschen 10 angeordnet ist. Die Tasche 10 kann sich also nicht nur zwischen zwei Zellblöcken 30 erstrecken sondern auch einen endseitigen Zellblock 30 abdecken. In diesem Fall ist nur eine der beiden Kammern 16a, 16b zur Wärmeabfuhr von dem Zellblock 30 wirksam. Die zweite, vom Zellblock abgewandte Kammer der Tasche 10 trägt nicht zur Kühlung des Zellblocks 30 bei. Insofern ist es bevorzugt, wenn die dem Zellblock 30 abgewandte Kammer 16a, 16b mit einem Füllmittel gefüllt ist, dass eine Fluidströmung in der dem endseitigen Zellblock 30 abgewandten Kammer 16a, 16b unterbindet. Mit anderen Worten kann eine der beiden Kammern 16a, 16b deaktiviert werden. Dies erhöht die Effizienz des Wärmetauschersystems.

### Bezugszeichenliste

- 10: Tasche
- 11: Anschluss
- 11a: Zufuhranschluss
- 11b: Abfuhranschluss
- 12: Rahmen
- 13: Folienwand
- 14: Trennplatte
- 15: Seitenfläche
- 16a: erste Kammer
- 16b: zweite Kammer
- 17: Verteilerkanal
- 18: Sammelkanal
- 19: Durchbrechung
- 20: Kanalfeld
- 21: erster Bereich
- 22: zweiter Bereich
- 23: Übergangsbereich
- 24: dritter Bereich
- 25: Strömungskanal
- 26: anschlussseitiges Ende
- 27: gegenüberliegendes Ende
- 28: Steg
- 29: Vorsprung
- 30: Zellblock
- 31: Batteriezelle
- 32: Kontaktplatte
- 33: Außenrand

## Patentansprüche

1. Wärmetauscher für eine Batterie, insbesondere für einen Hybridantrieb, mit Anschlüssen (11, 11a, 11b) für die Zufuhr und Abfuhr eines Wärmetauschermediums und einem Rahmen (12), der beidseitig mit flexiblen Folienwänden (13) zur Bildung einer durchströmbaren Tasche (10) verbunden ist, wobei der Rahmen (12) Strömungsleitelemente aufweist, wobei der Rahmen (12) eine Trennplatte (14) mit zwei parallelen Seitenflächen (15) aufweist, und wobei
- die Trennplatte (14) die Tasche (10) in eine erste Kammer (16a) und eine zweite Kammer (16b) teilt, die von den Seitenflächen (15) und den jeweiligen Folienwänden (13) fluiddicht begrenzt sind, wobei in den Seitenflächen (15) jeweils ein Kanalfeld (20) aus parallelen Strömungskanälen (25) ausgebildet ist, dessen Zuflussseite über einen Verteilerkanal (17) und dessen Abflussseite über einen Sammelkanal (18) mit den jeweiligen Anschlüssen (11, 11a, 11b) fluidverbunden sind, **dadurch gekennzeichnet, dass**
- die Anschlüsse (11, 11a, 11b) an einer Schmalseite der Tasche (10) vorgesehen sind und die Länge der Strömungskanäle (25) mit zunehmendem Abstand von den Anschlüssen (11, 11a, 11b) zunimmt, und dadurch, dass
- die Strömungskanäle (25) eine einheitliche Breite aufweisen, wobei sich eine Höhe der Strömungskanäle (25) von einem anschlussseitigen Ende (26) zu einem den Anschlüssen (11, 11a, 11b) gegenüberliegenden Ende (27) des Wärmetauschers erhöht.

2. Wärmetauscher nach Anspruch 1,
**dadurch gekennzeichnet, dass**
die Strömungskanäle (25) quer zur Längsachse der Tasche (10) angeordnet sind.

3. Wärmetauscher nach Anspruch 1 oder 2,
**dadurch gekennzeichnet, dass**
die maximale Länge der Strömungskanäle (25) der Breite der Tasche (10) entspricht.

4. Wärmetauscher nach einem der vorhergehenden Ansprüche,
**dadurch gekennzeichnet, dass**
das Kanalfeld (20) einen ersten Bereich (21) mit derselben Kanallänge, einen zweiten Bereich (22) mit konstant zunehmender Kanallänge, einen Übergangsbereich (23) mit größerer Zunahme der Kanallänge als im zweiten Bereich (22) und einen dritten Bereich (24) mit konstant zunehmender Kanallänge aufweist.

5. Wärmetauscher nach einem der vorhergehenden Ansprüche,
**dadurch gekennzeichnet, dass**
die Trennplatte (14) zwei Durchbrechungen (19) aufweist, die jeweils von den Anschlüssen (11, 11a, 11b) ausgehen und sich jeweils parallel zur Längsachse der Tasche (10) entlang des Kanalfelds (20), insbesondere entlang des ersten Bereichs (21) und, zumindest abschnittsweise, entlang des zweiten Bereichs (22), erstrecken.

6. Wärmetauscher nach einem der vorhergehenden Ansprüche,
**dadurch gekennzeichnet, dass**
sich eine Querschnittsfläche des Verteilerkanals (17) von einem anschlussseitigen Ende (26) zu einem den Anschlüssen (11, 11a, 11b) gegenüberliegenden Ende (27) des Wärmetauschers reduziert.

7. Batterie mit wenigstens einem Wärmetauscher nach einem der vorhergehenden Ansprüche mit wenigstens zwei Zellblöcken (30) aus zu temperierenden Rundzellen, wobei der Wärmetauscher zwischen den Zellblöcken (30) angeordnet ist und im Betrieb die erste Kammer (16a) den einen der beiden Zellblöcke (30) und die zweite Kammer (16b) des Wärmetauschers den anderen der beiden Zellblöcke (30) temperiert.

8. Batterie nach Anspruch 7,
**dadurch gekennzeichnet, dass**
zur Temperierung eines endseitigen Zellblockes (30) die vom Zellblock (30) abgewandte Kammer (16a, 16b) des Wärmetauschers mit einem Füllmittel gefüllt ist, das die Strömungskanäle (25) blockiert.

9. Fahrzeug, insbesondere Hybridfahrzeug, mit einer Batterie nach einem der Ansprüche 7 oder 8.

10. Verfahren zur Herstellung des Wärmetauschers nach einem der Ansprüche 1-6, bei dem der Rahmen (12) und die Folienwände (13) mit einem Laser verschweißt werden.

11. Verfahren nach Anspruch 10,
**dadurch gekennzeichnet, dass**
die Folienwände (13) mit zwei Schweißnähten verbunden werden, die in einem konstanten Abstand zueinander verlaufen.

## Claims

1. A heat exchanger for a battery, in particular for a hybrid drive, with connections (11, 11a, 11b) for the delivery and removal of a heat exchange medium and with a frame (12) which is connected on both sides to flexible film walls (13) for the formation of a pouch (10) which is able to be flowed through, wherein the frame (12) has flow-guiding elements, wherein the frame (12) has a separating plate (14) with two parallel lateral faces (15), and wherein
- the separating plate (14) divides the pouch (10) into a first chamber (16a) and a second chamber (16b), which are delimited in a fluid-tight manner by the lateral faces (15) and the respective film walls (13), wherein in the lateral faces (15) respectively a channel field (20) of parallel flow channels (25) is formed, the inflow side of which is fluidically connected to the respective connections (11, 11a, 11b) via a distributor channel (17) and the outflow side of which is fluidically connected to the respective connections (11, 11a, 11b) via a collecting channel (18),
**characterized in that**
- the connections (11, 11a, 11b) are provided on a narrow side of the pouch (10) and the length of the flow channels (25) increases with an increasing distance from the connections (11, 11a, 11b), and **in that**
- the flow channels (25) have a uniform width, wherein a height of the flow channels (25) increases from an end (26) on the connection side to an end (27) of the heat exchanger lying opposite the connections (11, 11a, 11b).

2. The heat exchanger according to claim 1,
**characterized in that**
the flow channels (25) are arranged transversely to the longitudinal axis of the pouch (10).

3. The heat exchanger according to claim 1 or 2,
**characterized in that**
the maximum length of the flow channels (25) corresponds to the width of the pouch (10).

4. The heat exchanger according to one of the preceding claims,
**characterized in that**
the channel field (20) has a first region (21) with the same channel length, a second region (22) with a constantly increasing channel length, a transition region (23) with a greater increase of the channel length than in the second region (22), and a third region (24) with a constantly increasing channel length.

5. The heat exchanger according to one of the preceding claims,
**characterized in that**
the separating plate (14) has two openings (19) which respectively originate from the connections (11, 11a, 11b) and extend respectively parallel to the longitudinal axis of the pouch (10) along the channel field (20), in particular along the first region (21) and, at least partially, along the second region (22).

6. The heat exchanger according to one of the preceding claims,
**characterized in that**
a cross-sectional area of the distributor channel (17) reduces from an end (26) on the connection side to an end (27) of the heat exchanger lying opposite the connections (11, 11a, 11b).

7. A battery with at least one heat exchanger according to one of the preceding claims, with at least two cell blocks (30) of round cells to be tempered, wherein the heat exchanger is arranged between the cell blocks (30) and during operation the first chamber (16a) tempers one of the two cell blocks (30) and the second chamber (16b) of the heat exchanger tempers the other of the two cell blocks (30).

8. The battery according to claim 7,
**characterized in that**
for the tempering of a cell block (30) on the end side, the chamber (16a, 16b) of the heat exchanger facing away from the cell block (30) is filled with a filling medium which blocks the flow channels (25).

9. A vehicle, in particular a hybrid vehicle, with a battery according to one of claims 7 or 8.

10. A method for the production of the heat exchanger according to one of claims 1 - 6, in which the frame (12) and the film walls (13) are welded with a laser.

11. The method according to claim 10,
**characterized in that**
the film walls (13) are connected with two weld seams which run at a constant distance with respect to one another.

## Revendications

1. Échangeur de chaleur pour une batterie, en particulier pour un entraînement hybride, avec des raccordements (11, 11a, 11b) pour l'amenée et l'évacuation d'un fluide d'échangeur de chaleur et un cadre (12), lequel est relié des deux côtés à des parois pelliculaires flexibles (13) pour la formation d'une poche traversable par un écoulement (10), dans lequel le cadre (12) présente des éléments de guidage d'écoulement, dans lequel le cadre (12) présente une plaque de séparation (14) avec deux surfaces latérales parallèles (15), et dans lequel
- la plaque de séparation (14) divise la poche (10) en une première chambre (16a) et une deuxième chambre (16b) qui sont délimitées de façon étanche aux fluides par les surfaces latérales (15) et les parois pelliculaires flexibles (13) respectives, dans lequel respectivement un champ à canaux (20) à canaux d'écoulement parallèles (25) est réalisé dans les surfaces latérales (15), dont le côté d'afflux est relié, via un canal de distribution (17), et dont le côté de décharge est relié, via un canal de collecte (18), en communication fluidique aux raccordements (11, 11a, 11b) respectifs,
**caractérisé en ce**
- **que** les raccordements (11, 11a, 11b) sont prévus sur un côté étroit de la poche (10) et que la longueur des canaux d'écoulement (25) augmente avec l'augmentation de la distance par rapport aux raccordements (11, 11a, 11b), et en ce
- **que** les canaux d'écoulement (25) présentent une largeur homogène, dans lequel une hauteur des canaux d'écoulement (25) augmente d'une extrémité (26) côté raccordement vers une extrémité (27), située en vis-à-vis des raccordements (11, 11a, 11b), de l'échangeur de chaleur.

2. Échangeur de chaleur selon la revendication 1,
**caractérisé en ce que**
les canaux d'écoulement (25) sont disposés transversalement à l'axe longitudinal de la poche (10) .

3. Échangeur de chaleur selon la revendication 1 ou 2,
**caractérisé en ce que**
la longueur maximale des canaux d'écoulement (25) correspond à la largeur de la poche (10).

4. Échangeur de chaleur selon l'une des revendications précédentes,
**caractérisé en ce que**
le champ à canaux (20) présente une première zone (21) avec la même longueur de canal, une deuxième zone (22) avec une longueur de canal à augmentation constante, une zone de transition (23) avec une augmentation plus importante de la longueur de canal que dans la deuxième zone (22), et une troisième zone (24) avec une longueur de canal à augmentation constante.

5. Échangeur de chaleur selon l'une des revendications précédentes,
**caractérisé en ce que**
la plaque de séparation (14) présente deux perforations (19) partant respectivement des raccordements (11, 11a, 11b) et s'étendant respectivement parallèlement à l'axe longitudinal de la poche (10) le long du champ à canaux (20), en particulier le long de la première zone (21) et, au moins par tronçons, le long de la deuxième zone (22).

6. Échangeur de chaleur selon l'une des revendications précédentes,
**caractérisé en ce**
**qu'**une aire de section du canal de distribution (17) diminue d'une extrémité (26) côté raccordement vers une extrémité (27), située en vis-à-vis des raccordements (11, 11a, 11b), de l'échangeur de chaleur.

7. Batterie avec au moins un échangeur de chaleur selon l'une des revendications précédentes avec au moins deux blocs de cellules (30) à cellules rondes à équilibrer en température, dans laquelle l'échangeur de chaleur est disposé entre les blocs de cellules (30) et, lors du fonctionnement, la première chambre (16a) équilibre la température de l'un des deux blocs de cellules (30) et la deuxième chambre (16b) de l'échangeur de chaleur équilibre la température de l'autre des deux blocs de cellules (30).

8. Batterie selon la revendication 7,
**caractérisée en ce que**,
pour équilibrer la température d'un bloc de cellules (30) côté extrémité, la chambre (16a, 16b) tournant le dos au bloc de cellules (30) de l'échangeur de chaleur est remplie avec une matière de remplissage qui bloque les canaux d'écoulement (25).

9. Véhicule, en particulier véhicule hybride, avec une batterie selon l'une des revendications 7 ou 8.

10. Procédé pour la fabrication de l'échangeur de chaleur selon l'une des revendications 1 - 6, dans lequel le cadre (12) et les parois pelliculaires (13) sont soudés avec un laser.

11. Procédé selon la revendication 10,
**caractérisé en ce que**
les parois pelliculaires (13) sont reliées par deux cordons de soudure qui s'étendent à une distance constante entre eux.
